# EUROPÄISCHE PATENTANMELDUNG

(11) **EP 1 202 103 A2**
(43) Veröffentlichungstag der Anmeldung: **02.05.2002**
(21) Anmeldenummer: 01121788.2
(22) Anmeldetag: 20.09.2001
(51) Int. Cl.: G02B 21/36

(54) **Verfahren zur Bilderfassung von Proben und optische Betrachtungsvorrichtung zur Durchführung des Verfahrens**

(30) Priorität: 26.10.2000 DE 10053202
(71) Anmelder: GSF-Forschungszentrum für Umwelt und Gesundheit GmbH, 85764 Neuherberg (DE)
(72) Erfinder: Schramm, Karl-Werner, Dr., 80538 München (DE); Rodenacker, Karsten, 81549 München (DE); Hense, Burghard, Dr., 85774 Unterföhring (DE); Gais, Peter, 82319 Starnberg (DE)
(74) Vertreter: Reinhard - Skuhra - Weise & Partner

(57) **Zusammenfassung**

Die konventionelle Fixierung von Organismen für eine Betrachtung hat einige Nachteile: Die chemische Fixierung ändert z.T. die Struktur der Organismen bzw. Gewebsproben, was ihre Identifizierung erschwert. Nicht alle Organismengruppen überstehen die Fixierung gleich gut. Die Fixierung ist nicht absolut dauerhaft. Daher ist die Erfindung gerichtet auf ein Verfahren zur Bilderfassung von Proben von Organismen durch eine optische Betrachtungsvorrichtung mit folgenden Schritten: Anfertigen von einer oder mehreren digitalen Abbildungen zumindest eines Ausschnitts der Probe, die sich in den zu Ihrer Aufnahme verwendeten optischen Parametern derart unterscheiden, daß unterschiedliche Strukturen der Organismen dargestellt werden; und Speichern der digitalen Abbildungsinformationen unter Herstellung einer die Abbildungen verknüpfende Link-Information. Die Erfindung ist weiter gerichtet auf eine optische Betrachtungsvorrichtung zur Datenerfassung von Proben von Organismen (25) mit einer optischen Einheit (10) mit einem Bereich (14) zum Einlegen einer Probe und Stellgliedern zur Veränderung der optischen Parameter und/oder eines Ausschnitts der Probe; einer Digitalkamera (11) zur Aufnahme von, von der optischen Einheit erzeugten, Darstellungen der Probe; und einer Steuereinheit (12) zur Steuerung der Stellglieder; und zur Durchführung des Verfahrens nach einem der Ansprüche 1 bis 19.

## Beschreibung

Verfahren zur Bilderfassung von Proben und optische Betrachtungsvorrichtung zur Durchführung des Verfahrens

Die vorliegende Erfindung betrifft ein Verfahren zur Bilderfassung von Proben, insbesondere solchen die nicht oder nicht dauerhaft fixiert sind, von Organismen und eine optische Betrachtungsvorrichtung mit einer optischen Einheit, einer Kamera und einer Steuereinheit zur Durchführung des Verfahrens.

Wenn derzeit eine qualitative und/oder quantitative Untersuchung von Organismen wie Bakterien, eukaryontischem Gewebe oder Eukaryonten wie Plankton eines Gewässers erfolgen soll, also beispielsweise die einzelnen Algen/Kleinstlebewesen am Mikroskop bestimmt und ausgezählt werden, so werden dazu die entsprechenden Proben nach der Probennahme chemisch fixiert und das fixierte Material ausgewertet. Die Fixierung sorgt dafür, daß sich die Artenzusammensetzung (z.B. im Falle von Plankton) oder andere maßgebliche strukturelle Charakteristika nicht mehr ändern. Zudem immobilisiert die Fixierung die Organismen, was für die Auswertung meist erforderlich ist. Dieses Verfahren hat einige Nachteile: Die chemische Fixierung ändert z.T. die Struktur der Organismen bzw. Gewebsproben, was ihre Identifizierung erschwert. Nicht alle Organismengruppen überstehen die Fixierung gleich gut, einige werden sogar zerstört und sind damit nicht auswertbar.

Die Fixierung ist nicht absolut dauerhaft. So hält beispielsweise bei der Untersuchung von Plankton die übliche Phytoplanktonfixierung (mit Lugol) nur bis zu etwa einem Jahr, danach treten deutliche Deformationen und Verluste auf. Eine spätere Bearbeitung der Proben oder eine Nachbearbeitung unter neu aufgetretenen wissenschaftlichen Gesichtspunkten wird dadurch ebenso unmöglich wie die Aufbewahrung von Belegmaterial für die Qualitätssicherung. Einige Fixierungsmittel (z.B. Glutaraldehyd, Formaldehyd für Zooplankton) sind zudem toxikologisch nicht unproblematisch.

Der Erfindung liegt daher die Aufgabe zu Grunde, Mittel bereitzustellen, welche eine Erfassung der für eine Untersuchung relevanten Strukturen von zu untersuchenden Organismen ermöglicht, ohne die mit Fixierungen verbundenen Nachteile in Kauf nehmen zu müssen.

Diese Aufgabe wird gelöst durch das Verfahren zur Bilderfassung von Proben von Organismen gemäß dem unabhängigen Patentanspruch 1 und die optische Betrachtungsvorrichtung zur Datenerfassung von Proben von Organismen gemäß dem unabhängigen Patentanspruch 19. Weitere vorteilhafte Ausgestaltungen, Aspekte und Details der vorliegenden Erfindung ergeben sich aus den abhängigen Ansprüchen, der Beschreibung und den beigefügten Zeichnungen.

Der Erfindung liegt das Prinzip zu Grunde, eine Datenerfassung an Proben mittels digitaler Bilderfassung durchzuführen, wobei die Bilderfassung ein - je nach Anwendungszweck - möglichst breites Spektrum an optischen Strukturmerkmalen erfassen soll, indem von der Probe mehrere Abbildungen mit verschiedenen Darstellungsmitteln angefertigt und elektronisch gespeichert werden können. Es handelt sich damit um eine Art "elektronische Fixierung" der Proben, bei der möglichst viele Strukturmerkmale in elektronisch gespeicherter Form erhalten bleiben.

Daher ist die Erfindung gerichtet auf ein Verfahren zur Bilderfassung von Proben von Organismen durch eine optische Betrachtungsvorrichtung mit folgenden Schritten:
- Anfertigen von einer oder mehreren digitalen Abbildungen zumindest eines Ausschnitts der Probe, die sich in den zu Ihrer Aufnahme verwendeten optischen Parametern derart unterscheiden, daß unterschiedliche Strukturen der Organismen dargestellt werden; und
- Speichern der digitalen Abbildungsinformationen unter Herstellung einer diese Abbildungen verknüpfenden Link-Information.

Unter einer Probe ist hier eine der Natur oder einer anderen Quelle entstammende, zu untersuchende Einheit zu verstehen, beispielsweise Flüssigkeit aus Gewässern, Agar-Stücke aus bakteriellen Kulturen, zellhaltige Medien etc. Die Probe enthält den oder die zu untersuchenden Organismen, d.h. Lebensformen wie Bakterien, eukayontische Einzeller, Algen, Eukaryontische Vielzeller wie Pflanzen oder Tiere, etc. Es kann sich hierbei um einzelne Spezies handeln oder um Mischpopulationen verschiedener Spezies von Organismen.

Unter optischen Parametern sind im Sinne der vorliegenden Erfindung alle Einflußgrößen zu verstehen, welche über die Betrachtungsvorrichtung auf das durch diese erzeugte Bild Einfluß nehmen, seien dies komplexe Maßnahmen wie die Verwendung einer Fluoreszenzlichtquelle (und entsprechend präparierter Proben) oder einfachere Maßnahmen wie die Festlegung der Schärfeebene (Fokusierung).

Eine Bilderfassung ist eine Erfassung eines von z.B. einer optischen Vorrichtung erzeugten Bildes der Probe mit den Organismen. Erfindungsgemäß erfolgt die Bilderfassung durch eine digitale Abbildung, bei der das Bild in eine vorgegebene Zahl von Bildpunkten zerlegt wird, deren Helligkeit und Farbwiedergabe gespeichert wird, um damit den Bildpunkt zu definieren. Diese bilden einen Teil der Abbildungsinformationen, zu denen weitere Nebeninformationen, wie die benötigten Link-Informationen, aber auch andere Daten wie die verwendeten optischen Parameter, gehören können.

Die derart gespeicherten Abbildungen können im Anschluß in vielfältiger Weise verwendet werden. So können diese durch einen Beobachter ausgewertet werden, wobei sich durch die verschiedenen Darstellungen der Organismen in den einzelnen Abbildungen vielfältige Möglichkeiten einer Analyse ergeben. Es ist jedoch genauso möglich, die digital gespeicherten Bilder mittels entsprechender Bildanalyseprogramme (auch komparativ) auszuwerten und dadurch Strukturen erkennbar zu machen, die unter Verwendung nur einer einzelnen Abbildung nicht darstellbar gewesen wären. Bei Erstellung einer Reihe von Abbildungen, die sich in der Schärfeebene unterscheiden, ist es schließlich auch möglich, ein dreidimensionales Bild der Organismen zu berechnen.

Das erfindungsgemäße Verfahren kann unter Verwendung einer optischen Betrachtungsvorrichtung mit einer Digitalkamera und einer Steuereinheit zur Steuerung der Betrachtungsvorrichtung und der Digitalkamera durchgeführt werden und dabei die folgenden Schritte aufweisen:
A. Einbringen einer Probe in die optische Betrachtungsvorrichtung;
B. Einstellen von optischen Parametern der optischen Betrachtungsvorrichtung durch die Steuereinheit;
C. Aufnehmen einer ersten digitalen Abbildung der Probe durch die von der Steuereinheit gesteuerte Digitalkamera;
D. Einstellen von optischen Parametern der optischen Betrachtungsvorrichtung durch die Steuereinheit, die sich von der ersten Darstellung unterscheiden;
E. Aufnehmen einer weiteren digitalen Abbildung der Probe durch die von der Steuereinheit gesteuerte Digitalkamera; und
F. Speichern der digitalen Abbildungsinformationen der Probe.

Die Punkte D und E sind dabei optional. Es versteht sich hierbei, daß Schritt F auch sukzessive durchgeführt werden kann, wobei unmittelbar nach jedem Aufnahmen der digitalen Abbildung die anfallenden Daten gespeichert werden, ohne die Anfertigung weiterer Abbildungen abzuwarten.

Man erhält somit eine oder mehrere digitale Abbildungen, welche einen oder mehrere Organismen zeigen, wobei die Aufnahmen unterschiedliche strukturelle Aspekte der Organismen zeigen.

Um eine möglichst große Zahl an Strukturmerkmalen zu erfassen, können die Schritte D und E zumindest zwei Mal durchlaufen werden, wobei sich die optischen Parameter jeden Durchlaufs unterscheiden.

Bei Lebendproben können Bewegungen der erfassten Organismen oder gar deren Vermehrung dazu führen, daß sich die in einer Serie aufgenommen Abbildungen voneinander mehr oder weniger unterscheiden. Hier kann bei der späteren Auswertung der Proben eine rechnerische Kompensation eine bessere Übereinstimmung der Abbildungen erreichen, so daß die Strukturen eines einzelnen Organismus unter verschiedenen optischen Parametern verglichen und ggfs. rechnerisch zu einem Gesamtbild zusammengefügt werden können oder daß eine rein statistische Erfassaung einer Vielzahl von Organismen nach verschiedenen Kriterien durch die verschiedenen Abbildungen möglich bleibt. In der Regel wird es bevorzugt werden, daß die Abbildungen der Proben so rasch nacheinander aufgenommen werden, daß sich die Probe zwischen der ersten und der letzten Abbildung im wesentlichen nicht verändert.

Das Steuergerät kann vorzugsweise ebenfalls den zeitlichen Abstand zwischen den Aufnahmen festlegen. In einer bevorzugten Ausführungsform kann der zeitliche Abstand zwischen den Aufnahmen vorgegeben werden. Dies ermöglicht beispielsweise die Beobachtung von Veränderungen an Organismen, kann jedoch auch dazu verwendet werden, die obige, vorzugsweise Bedingung einer zeitlichen Abfolge zu erfüllen, bei der die Probe sich nicht verändert.

Die Kombination der für eine Abbildung verwendeten optischen Parameter entscheidet über die abbildbaren Strukturen der zu erfassenden Organismen. Es steht das gesamte Instrumentarium optischer Probenaufbereitung zur Verfügung, welches je nach Verwendungszweck und den gewünschten Informationen im Rahmen der "elektronischen Fixierung" ausgewählt werden kann, wobei die Auswahl naturgemäß auch von den Fähigkeiten der jeweils verwendeten optischen Betrachtungsvorrichtung abhängt. Die optischen Parameter können ausgewählt sein aus einer Hellfelddarstellung (also einer normalen Durchsichtbeleuchtung oder Aufsichtbeleuchtung der betrachteten Probe), einer Fluroreszenzdarstellung (bei der die Organismen der Probe zuvor mit geeigneten Fluoreszenzfarbstoffen gefärbt werden können und die Beleuchtung der Probe durch eine anregende Lichtquelle, beispielsweise einen Laser, erfolgt), einer Phasenkontrastdarstellung (bei der durch geeignete Beleuchtung der Phasenkontrast sichtbar gemacht wird), einer optischen Schärfeebene (d.h. der Ebene innerhalb der ganzen Probe, welche ein scharfes Abbild auf der Bildebene erzeugt; dies entspricht der Möglichkeit, das Objektiv der optischen Betrachtungseinheit senkrecht zur Probe hin- und her zu verfahren), der Farbe des einfallenden Lichts (gesteuert durch entsprechende Filter im Strahlengang zwischen Lichtquelle und Probe), einer Vergrößerung (auswählbar durch Veränderung der Brennweite des in der optischen Betrachtungsvorrichtung verwendeten Objektivs bzw. durch Objektivwechsel), eines Kontrasts (steuerbar z.B. durch Veränderung einer Blende, einer Helligkeit (die Variieren der Leuchtkraft der Lichtquelle, Verändern einer Blende oder Wechsel eines Neutralgraufilters), einer Blende (z.B. zwischen Probe und Objektiv) und einer Kombination aus mehreren dieser Parameter.

Es werden Abbildungsinformationen gespeichert, z.B. zur Qualitätssicherung. Diese können neben der eigentlichen optischen Darstellung, d.h. der Speicherung der Farb- und/oder Helligkeitswerte der einzelnen Bildpunkte der Abbildung, welche in jedem Fall erfolgen muß, zahlreiche weitere Informationen umfassen, welche zur Bildauswertung nützlich oder notwendig sein können. Die Abbildungsinformationen können beispielsweise umfassen: eine Positionierung der Probe in der optischen Ebene (d.h. eine Information, welche Stelle, d.h. welcher Ausschnitt der Probe bei Aufsicht aufgenommen wurde, ein Wert, der sich beispielsweise als X- und Y-Koordinaten eine Objekttisches, auf dem sich die Probe befindet, erfasst werden kann), eine Positionierung der Probe senkrecht zur optischen Ebene (d.h. der Schärfeebene in Z-Richtung, wobei beispielsweise eine Objektivstellung relativ zur Oberfläche der Probe oder des Objekttischs als Maß verwendet werden kann), die zur Erzeugung der Abbildung verwendeten optische Parameter, wie oben beschrieben, die zur Erzeugung der Abbildung verwendeten Kameraparameter (wie beispielsweise Belichtungszeit, verwendete interne Blende, Bildnummer, eingestellte Empfindlichkeit des verwendeten CCD-Panels; aber auch zeitlicher Abstand zu einer vorhergehenden Abbildung), eine Information über die Relation der Abbildung zu anderen Abbildungen (also beispielsweise ein Verweis auf die anderen, von derselben Probe oder/und demselben Ausschnitt daraus augenommen Abbildungen) und/oder benutzerspezifizierte Informationen (wie Probenname, Untersuchername, Art einer Probenvorbehandlung etc.).

Für die konkrete Realisierung der Speicherung stehen verschiedene, dem Fachmann auf dem Gebiet der Datenverarbeitung geläufige Verfahren zur Verfügung. So kann die gesamte zu speichernde Information beispielsweise in einer Datenbank, wie einer relationalen oder objektorientierten Datenbank mit der Möglichkeit zur Speicherung von Bilddaten, gespeichert werden. Ebenso ist es möglich, die Informationen in verschieden einfachen Dateien abzulegen und miteinander über verwandte Dateinamen oder gemeinsame Unterverzeichnisse eines Dateisystems logisch zu verbinden.

Wie bereits oben erwähnt, kann die digitale Erfassung der Proben auch auf bestimmte Ausschnitte aus der Gesamtprobe beschränkt werde, beispielsweise wenn aufgrund einer Vergrößerung in der optischen Betrachtungsvorrichtung die Digitalkamera nicht die Gesamtprobe in einer Abbildung erfassen kann. Daher kann es bevorzugt sein, daß sich an Schritt A der folgende Schritt anschliesst:
A1: Positionieren eines aufzunehmenden Ausschnitts der Probe im Aufnahmebereich der Kamera.

Die Positionierung erfolgt wiederum vorzugsweise mittels Steuerung durch die Steuereinheit, kann jedoch auch manuell vorgenommen werden. Entsprechend ansteuerbare Stellglieder der optischen Betrachtungsvorrichtung, beispielsweise einen Objekttisch antreibende Schrittmotoren, können die entsprechende Einstellung des gewünschten Ausschnitts bewirken.

Um eine weitergehende Durchmusterung einer Probe an verschiedenen Stellen zu erreichen, kann es weiterhin bevorzugt sein, daß die Schritte A1 bis F mehrfach durchlaufen werden, wobei sich die aufzunehmenden Ausschnitte jeden Durchlaufs unterscheiden.

Als optische Betrachtungsvorrichtung kommen verschiedenste Vorrichtungen in Frage, welche die Bedingungen erfüllen, Proben mittels einer digitalen Kamera aufnehmen zu können und die Stellglieder aufweisen, so daß die optischen Parameter durch die Steuereinheit automatisch verändert werden können. So wird es häufig bevorzugt, daß die optische Betrachtungsvorrichtung eine optische Vergrößerung der erfassten Organismen durchführt, beispielsweise, indem die optische Betrachtungsvorrichtung ein Mikroskop aufweist. Auch andere Vergrößerungsvorrichtungen, beispielsweise Lupenvorichtungen oder Makrovorsätze an Kameras, zusammen mit einer geeigneten Beleuchtungseinrichtung, sind für die Erfindung verwendbar. Ein modernes Mikroskop verfügt allerdings über die größte Auswahl an möglichen Einstellungen der optischen Parameter, so daß die Erfindung durch Verwendung eines entsprechend ausgerüsteten Mikroskops am flexibelsten durchführbar ist.

Nicht jede Probe ist unmittelbar nach ihrer Entnahme einer Betrachtung zugänglich. Vielmehr ist es häufig notwendig, die Probe vorzubereiten, um sie einer Untersuchung zugänglich zu machen. Hier steht das gesamte Spektrum an im Stand der Technik verwendeten Vorbereitungsmaßnahmen zur Verfügung.So kann die die Probe vor dem Einbringen in die optische Betrachtungsvorrichtung so bearbeitet werden, daß sie optisch erfassbar ist, beispielsweise dadurch,daß die Organismen der Probe vor dem Einbringen in die optische Betrachtungsvorrichtung gefärbt werden. Das Färben kann mittels eines Lebendfarbstoffs erfolgen.Es kann auch nützlich sein, die Probe zu filtern oder anders zu klären, um Verunreinigungen zu entfernen.

Bei Kleinstlebewesen wie Plankton kann es vorkommen, daß die Beweglichkeit der Organismen so groß ist, daß nicht mehrere Abbildungen hintereinander erzeugt werden können, die dieselben Organismen und dieselben Stellen des Ausschnitts zeigen.

Es kann daher bevorzugt sein, daß die Organismen der Probe vor dem Einbringen in die optische Betrachtungsvorrichtung narkotisiert werden.

Um die Beobachtbarkeit einer gewünschten Menge an Organismen sicherzustellen, kann die Zahl der Organismen in der Probe vor dem Einbringen in die optische Betrachtungsvorrichtung durch Anreicherung oder Verdünnung auf einen vorgegebenen Wert gebracht werden.

Das erfindungsgemäße Verfahren ist für ein großes Spektrum an Lebensformen geeignet. So können Bakterien, Pilze, Algen, Kleinstlebewesen, Gewebe, Zellkulturen und -verbände etc. "elektronisch fixiert" werden. Das erfindungsgemäße Verfahren ist ursprünglich im Hinblick auf die Untersuchung von Plankton entwickelt worden und zeigt dort seine Vorteile besonders deutlich.

Das erfindungsgemäße Verfahren ist für eine möglichst weitgehende Automatisierung ausgelegt. Die Steuereinheit steuert vorzugsweise den gesamten Ablauf der Auschnittsauswahl, der Auswahl und Einstellung der optischen Parameter, der Aufnahmefrequenz und -zahl etc. Trotzdem kann es wünschenswert sein, einem Bediener eine Eingriffsmöglichkeit zu geben, beispielsweise die optischen Parameter (bzw. Kombinationen aus diesen) vorab auszuwählen oder dem System Informationen über die Proben (Art, Herkunft, Zeit der Entnahme etc.) zukommen zu lassen. Um einem Benutzer diese Eingriffsmöglichkeiten zu geben und zugleich den Verfahrensablauf möglichst wenig zu stören, kann als Möglichkeit vorgesehen werden, daß die optischen Parameter für die verschiedenen Abbildungen und/oder die aufzunehmenden Ausschnitte der Probe und/oder der zeitliche Abstand zwischen der Aufnahme der Abbildungen vor Schritt A durch einen Benutzer festgelegt und in der Steuereinheit zwischengespeichert werden.

Die Erfindung ist weiterhin gerichtet auf eine optische Betrachtungsvorrichtung zur Datenerfassung von Proben von Organismen mit
einer optischen Einheit mit einem Bereich zum Einbringen einer Probe und Stellgliedern zur Veränderung der optischen Parameter und/oder eines Ausschnitts der Probe;
einer Digitalkamera zur Aufnahme von, von der optischen Einheit erzeugten, Darstellungen der Probe;
einer Steuereinheit zur Steuerung der Stellglieder und der Digitalkamera; und zur Durchführung des erfindungsgemäßen Verfahrens.

Eine Ablaufkontrolleinheit, die vorzugsweise in die Steuereinheit integriert ist, steuert dabei die Durchführung des Verfahrens. Steuereinheit und Ablaufkontrolleinheit können einen Mikrocontroller aufweisen, der mittels eines Datenverarbeitungsprogramms über die Steuereinheit den Ablauf des Verfahrens steuert.

Desweiteren kann die Steuereinheit eine Speichereinheit zur Speicherung der von der Digitalkamera aufgenommenen und anderer Abbildungsinformationen aufweisen. Auf diese Weise können alle elektronischen Einrichtungen in dem Steuergerät konzentriert werden, welches beispielsweise auch als Universaldatenverarbeitungsanlage ausgelegt sein kann.

Im folgenden soll die Erfindung anhand von konkreten Ausführungsbeispielen weiter erläutert werden, wobei auf die beigefügten Zeichnungen bezug genommen wird, in denen folgendes dargestellt ist:
Fig. 1 zeigt eine schematisierte Ansicht einer erfindungsgemäßen Betrachtungsvorrichtung; und
Fig. 2 zeigt eine Aufsicht auf eine Probenkammer mit zu erfassenden Organismen.

Ein mögliches, bevorzugtes Einsatzgebiet der vorliegenden Erfindung ist die Analyse von Plankton. Eine Planktonuntersuchung erfolgt allgemein in vier Phasen:
Phase 1, die Probenahme, wird durch das erfindungsgemäße Verfahren nicht geändert.
Phase 2 ist die Probenaufbereitung, dazu gehören Probenfilterung, -färbung, -anreicherung u.a.
Phase 3, die Fixierung der Probe, dient der Immobilisierung und der Haltbarmachung der Probe.
Phase 4., die Auswertung, umfasst je nach Fragestellung Aspekte wie Identifiziertung der Arten, Zählung der Individuen, Vermessungen u.ä.

Die vorliegende Erfindung betrifft insbesondere die Phasen 2 und 3 unter Berücksichtigung der Erfordernisse von Phase 4.

Phase 2: Aufbereitungsverfahren wie Filterung oder Färbung sind durch Aspekte des erfindungsgemäße Verfahren abgedeckt und entsprechen vorbekannten Vorgehensweisen. Ihre Durchführung hängt von der konkreten Fragestellung ab.
Als Vorbereitungsschritt für eine "elektronische Fixierung" ist es i.A. notwendig, die Probe anzureichern oder zu verdünnen. Dies geschieht durch entsprechende Verfahren, wie die Zugabe definierter Mengen von Verdünungswasser, Anreicherung durch Zentrifugieren oder mit Hilfe von Planktonnetzen. Je nach Fragestellung oder aus sonstigen Gründen kann weiterhin eine Narkotisierung der Proben erfolgen.

Phase 3: Fixierung. Sie erfolgt hier durch eine digitale Erfassung von Abbildungen der Proben, im Gegensatz zu den bisher üblichen chemischen Fixierungen. Ein typischer Geräteaufbau für die Untersuchung von Plankton besteht aus einem Umkehrmikroskop, dessen Mikroskoptisch und Objektive mittels Stellgliedern elektronisch verfahrbar sind (Mikroskoptisch in XY-Richtung, Objektive in Z-Richtung). Dadurch ist auf den Objektträgem jede Stelle im Raum ansteuerbar. Das Umkehrmikroskop ist mit einer Steuereinheit gekoppelt, beispielsweise einer EDV-Einheit wie einem Computer. Bei einer bevorzugten Asuführungsform steuert die Steuereinheit einerseits das Mikroskop und die Kamera und empfängt andererseits die über eine Kamera im Mikroskop live aufgenommenen Bilder zur weiteren Speicherung.

Als Mikroskop kann dabei beispielsweise ein Umkehrmikroskop der Firma Leica vom Typ DM IRBE mit angeschlossener EDV-Einheit dienen.

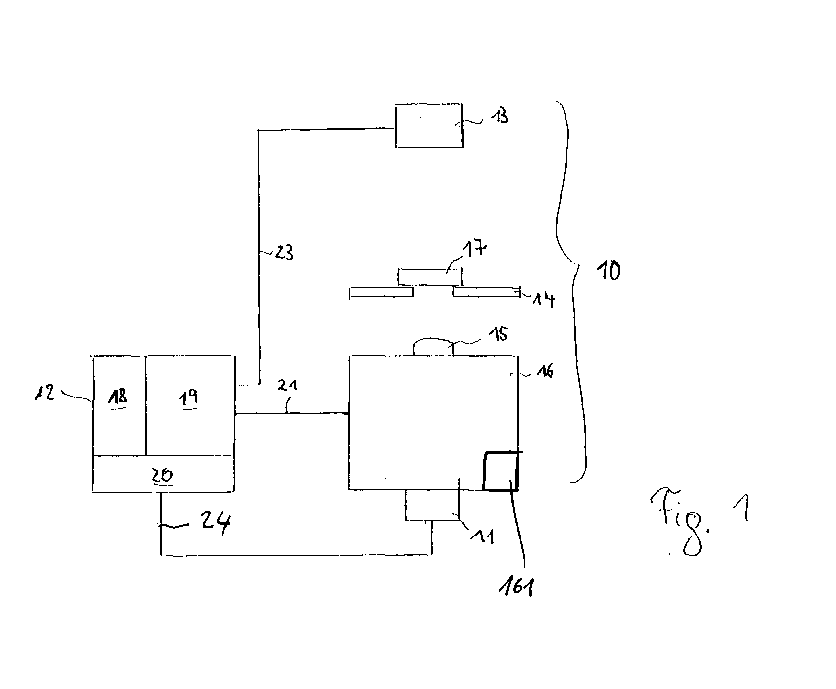

Fig.1 zeigt in schematisierter Darstellung eine erfindungsgemäße Betrachtungsvorrichtung mit einem üblichen Umkehrmikroskop. Die optische Betrachtungsvorrichtung besteht aus einer optischen Einheit 10, einer Digitalkamera 11 und einer Steuereinheit 12. Die optische Einheit 10 weist eine Lichtquelle 13 zur Beleuchtung einer Probe in einer Probenkammer 17 auf, die auf einem Objekttisch 14 positioniert ist. Durch ein Objektiv 15 wird ein Bild im Hauptteil 16, der auch Stellglieder zum Verfahren des Objektivs, des Objekttischs etc. aufweist, erzeugt. Insbesondere weist der Hauptteil 16 auch eine Fluoreszenzbeleuchtung 161 auf.

Der Steuereinheit 12 weist im vorliegenden Fall einen Steuerteil 19 zur Ansteuerung der Komponenten der optischen Einheit, eine Kontrollablaufeinheit 18 zur Durchführung des erfindungsgemäßen Verfahrens und eine Speichereinheit 20 zur Speicherung der erzeugten Daten auf. Das Steuerteil ist über Datenkabel/Steuerleitungen 21 und 23 mit Hauptteil 16 und Lichtquelle 13 verbunden und kann über diese Leitungen die jeweiligen Komponenten beeinflussen.

Die Digitalkamera 11 ist zusätzlich über eine Datenleitung 24 mit der Speichereinheit 20 verbunden. Es versteht sich, daß die hier verwendeten Leitungen nur als Beispiel anzusehen sind und bei einem internen Steuermechanismus der optischen Einheit auch eine einzige Steuerleitung, die beispielsweise von Steuereinheit 12 zum Hauptteil 16 laufen kann, die gesamten Steuerinformationen übertragen kann. Auch die Datenübertragung kann über eine solche Leitung erfolgen, wenn die Daten der Digitalkamera an sie weitergeleitet werden können.

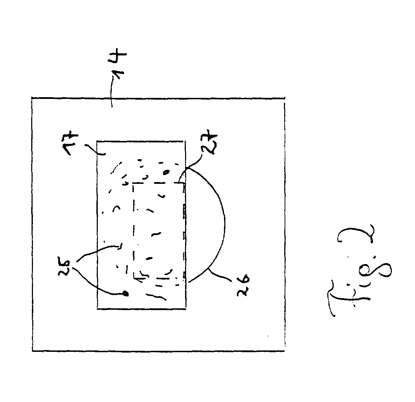

Ein Beispiel für das erfindungsgemäße Verfahren wird nachfolgend beschrieben. Eine repräsentative Menge (nach Durchmischung) der in Phase 2 vorbereiteten unfixierten Proben wird in eine Objektträgerkammer 17 mit mehreren ml Inhalt gebracht. Die Objektträgerkammer 17 wird auf den Mikroskoptisch 14 gelegt. Ein Computerprogramm zur Durchführung des erfindungsgemäßen Verfahrens steuert das Mikroskop nun so, daß mit geeigneten optischen Modi (Hellfeld, Phasenkontrast. Fluoreszenz) in der Kammer 17 eine so gestaltete Sequenz von Bildern aufgenommen wird, daß später eine Identifizierung und statistische Auswertung des Planktons möglich ist. Abhängig von Planktondichte und -art ist dafür entsprechend die Zahl der Bilder und ihre automatische Lokalisierung ausgelegt. Gleiches gilt für die Auswahl der eingesetzten Vergrösserung (Objektivwahl). Während der Abbildungsgenerierung kann dabei bei Bedarf ein Objektivwechsel erfolgen. Fig. 2 zeigt in Aufsicht den Objekttisch 14 mit einer Objektträgerkammer (Probenkammer 17), welche Organismen (25) enthält. Im vorliegenden Beispiel kann die Objektträgerkammer 17 über den feststehenden Objekttisch 14 bewegt werden. Eine Öffnung 26 im Objekttisch 14 ermöglicht den Durchtritt von Licht auf das darunter angeordnete Objektiv 15. Die Digitalkamera 11 erfasst davon einen Ausschnitt 27, dessen Darstellung im Anschluß an die Aufnahme gespeichert wird.

Die Planung der Abbildungsgenerierung kann auch in dieser Ausführungsform der vorliegenden Erfindung interaktiv geschehen, d.h. zu Beginn der Bildgenerierung kann ein Bediener eingeben, welche Vergrößerungen, optischen Verfahren, Bildsequenzen, Bildlokalitäten, Helligkeiten und Farbkorrekturen etc. verwendet werden sollen, so daß eine Anpassung an die Fragestellung möglich ist. Die einzelnen von der Kamera 11 aufgenommenen Bilder werden an die EDV-Einheit 12 weitergeleitet. Dort wird ihnen beispielsweise ein nachvollziehbarer Name zugewiesen, unter dem sie dann abgespeichert werden, oder sie werden in einer geeigneten Datenbank mit entsprechenden Zusatzinformationen gespeichert. Dadurch ist es möglich, im Nachhinein festzustellen, an welchem Ort, mit welchem optischen Verfahren und welcher Vergrösserung das jeweilige Bild generiert wurde. Eine Namenzuweisung kann interaktiv erfolgen, d.h. zu Beginn wird der Name der untersuchten Probe abgefragt. Dieser wird dann in den Bildnamen mit aufgenommen oder entsprechend in der Datenbank gespeichert.

Die so erhaltene Datenbank stellt eine "elektronische Fixierung" von Planktonproben dar, die diese für unbegrenzte Zeit haltbar und auswertbar macht.

Das Verfahren arbeitet zeitökonomisch, indem es den interaktiven Teil am Anfang der Bildgenerierung durchlaufen lässt. Der Rest des erfindungsgemäßen Verfahrens wird vollautomatisch durchgeführt, ohne dass ein Untersucher anwesend sein muß. Die Computersteuerung kann auch eine Ausschaltung der Beleuchtung 13 am Ende der Probengenerierung beinhalten. so daß der Bearbeiter sich nach dem Start längerfristig entfernen kann, also am Ende der Bildgenerierung nicht anwesend sein muß.

Die Erfindung ist nicht auf die beschriebene Ausführungsform beschränkt.

Es sei erwähnt, daß Phase 2 und 3 auch zeitlich umgekehrt erfolgen können, also Phase 3 vor Phase 2.

## Patentansprüche

1. Verfahren zur Bilderfassung von Proben von Organismen (25) durch eine optische Betrachtungsvorrichtung mit folgenden Schritten:
- Anfertigen von einer oder mehreren digitalen Abbildungen zumindest eines Ausschnitts (27) der Probe, die sich in den zu Ihrer Aufnahme verwendeten optischen Parametern derart unterscheiden, daß unterschiedliche Strukturen der Organismen (25) dargestellt werden; und
- Speichern der digitalen Abbildungsinformationen unter Herstellung einer die Abbildungen verknüpfende Link-Information.

2. Verfahren nach Anspruch 1 unter Verwendung einer optischen Betrachtungsvorrichtung mit einer Digitalkamera (11) und einer Steuereinheit (12) zur Steuerung der optischen Betrachtungsvorrichtung und der Digitalkamera (11); mit folgenden Schritten:
A. Einbringen einer Probe in die optische Betrachtungsvorrichtung;
B. Einstellen von optischen Parametern der optischen Betrachtungsvorrichtung durch die Steuereinheit (12);
C. Aufnehmen einer ersten digitalen Abbildung der Probe durch die von der Steuereinheit (12) gesteuerte Digitalkamera (11);
D. Einstellen von optischen Parametern der optischen Betrachtungsvorrichtung durch die Steuereinheit (12), die sich von der ersten Darstellung unterscheiden;
E. Aufnehmen einer weiteren digitalen Abbildung der Probe durch die von der Steuereinheit gesteuerte Digitalkamera (11); und
F. Speichern der digitalen Abbildungsinformationen der Probe.

3. Verfahren nach Anspruch 2, **dadurch gekennzeichnet, daß** die Schritte D und E zumindest zwei Mal durchlaufen werden, wobei sich die optischen Parameter jedes Durchlaufs unterscheiden.

4. Verfahren nach einem der Ansprüche 1 bis 3, **dadurch gekennzeichnet, daß** die Abbildungen der Proben so rasch nacheinander aufgenommen werden, daß sich die Probe zwischen der ersten und der letzten Abbildung im wesentlichen nicht verändert.

5. Verfahren nach einem der Ansprüche 1 bis 4, **dadurch gekennzeichnet, daß** der zeitliche Abstand zwischen den Aufnahmen vorgegeben wird.

6. Verfahren nach einem der Ansprüche 1 bis 5, **dadurch gekennzeichnet, daß** die optischen Parameter ausgewählt sind aus einer Hellfelddarstellung, einer Fluroreszenzdarstellung, einer Phasenkontrastdarstellung, einer optischen Schärfeebene, der Farbe des einfallenden Lichts, einer Vergrößerung, einem Kontrast, einer Helligkeit, einer Blende und einer Kombination aus mehreren dieser Parameter.

7. Verfahren nach einem der Ansprüche 1 bis 6, **dadurch gekennzeichnet, daß** die Abbildungsinformationen umfassen: eine optische Darstellung und eine Positionierung der Probe in der optischen Ebene, eine Positionierung der Probe senkrecht zur optischen Ebene, die zur Erzeugung der Abbildung verwendeten optische Parameter, die zur Erzeugung der Abbildung verwendeten Kameraparameter, eine Information über die Relation der Abbildung zu anderen Abbildungen und/oder benutzerspezifizierte Informationen.

8. Verfahren nach einem der Ansprüche 2 bis 7, **dadurch gekennzeichnet, daß** sich an Schritt A der folgende Schritt anschliesst:
A1: Positionieren eines aufzunehmenden Ausschnitts (27) der Probe im Aufnahmebereich der Kamera.

9. Verfahren nach Anspruch 8, **dadurch gekennzeichnet, daß** die Schritte A1 bis F mehrfach durchlaufen werden, wobei sich die aufzunehmenden Ausschnitte (27) jeden Durchlaufs unterscheiden.

10. Verfahren nach einem der Ansprüche 1 bis 9, **dadurch gekennzeichnet, daß** die optische Betrachtungsvorrichtung eine optische Vergrößerung der erfassten Organismen (25) durchführt.

11. Verfahren nach Anspruch 10, **dadurch gekennzeichnet, daß** die optische Betrachtungsvorrichtung ein Mikroskop aufweist.

12. Verfahren nach einem der Ansprüche 1 bis 11, **dadurch gekennzeichnet, daß** die Probe vor dem Einbringen in die optische Betrachtungsvorrichtung so bearbeitet wird, daß sie optisch erfassbar ist.

13. Verfahren nach Anspruch 12, **dadurch gekennzeichnet, daß** die Organismen (25) der Probe vor dem Einbringen in die optische Betrachtungsvorrichtung gefärbt werden.

14. Verfahren nach Anspruch 13, **dadurch gekennzeichnet, daß** das Färben mittels eines Lebendfarbstoffs erfolgt.

15. Verfahren nach einem der Ansprüche 1 bis 14, **dadurch gekennzeichnet, daß** die Organismen (25) der Probe vor dem Einbringen in die optische Betrachtungsvorrichtung narkotisiert werden.

16. Verfahren nach einem der Ansprüche 1 bis 15, **dadurch gekennzeichnet, daß** die Zahl der Organismen (25) in der Probe vor dem Einbringen in die optische Betrachtungsvorrichtung durch Anreicherung oder Verdünnung auf einen vorgegebenen Wert gebracht wird.

17. Verfahren nach einem der Ansprüche 1 bis 16, **dadurch gekennzeichnet, daß** die Probe Plankton ist.

18. Verfahren nach einem der Ansprüche 2 bis 17, **dadurch gekennzeichnet, daß** die optischen Parameter für die verschiedenen Abbildungen und/oder die aufzunehmenden Ausschnitte (27) der Probe und/oder ein zeitlicher Abstand zwischen der Aufnahme der Abbildungen vor Schritt A durch einen Benutzer festgelegt und in der Steuereinheit (12) zwischengespeichert werden.

19. Optische Betrachtungsvorrichtung zur Datenerfassung von Proben von Organismen (25) mit:
einer optischen Einheit (10) mit einem Bereich (14) zum Einlegen einer Probe und Stellgliedern zur Veränderung der optischen Parameter und/oder eines Ausschnitts der Probe;
einer Digitalkamera (11) zur Aufnahme von, von der optischen Einheit erzeugten, Darstellungen der Probe; und
einer Steuereinheit (12) zur Steuerung der Stellglieder und der Digitalkamera (11); und zur Durchführung des Verfahrens nach einem der Ansprüche 1 bis 19.

20. Optische Betrachtungsvorrichtung nach Anspruch 19, **dadurch gekennzeichnet, daß** eine Ablaufkontrolleinheit (18) in die Steuereinheit (12) integriert ist.

21. Optische Betrachtungsvorrichtung nach Anspruch 20, **dadurch gekennzeichnet, daß** Steuereinheit (12) und Ablaufkontrolleinheit (13) einen Mikrocontroller aufweisen, der mittels eines Datenverarbeitungsprogramms über die Steuereinheit den Ablauf des Verfahrens steuert.

22. Optische Betrachtungsvorrichtung nach einem der Ansprüche 19 bis 21, **dadurch gekennzeichnet, daß** die Steuereinheit (12) eine Speichereinheit (20) zur Speicherung der von der Digitalkamera (11) aufgenommenen und anderer Abbildungsinformationen aufweist.
